# EUROPÄISCHE PATENTSCHRIFT

(11) **EP 3 320 613 B1**
(45) Veröffentlichungstag und Bekanntmachung des Hinweises auf die Patenterteilung: **08.06.2022**
(21) Anmeldenummer: 16738709.1
(22) Anmeldetag: 05.07.2016
(51) Int. Cl.: H02P 6/18

(54) **BETRIEB EINER ROTIERENDEN ELEKTRISCHEN MASCHINE MIT ZWEI POSITIONSSENSOREN**
OPERATION OF A ROTATING ELECTRIC MACHINE WITH TWO POSITION SENSORS
FAIRE TOURNER UNE MACHINE ELECTRIQUE AVEC DEUX CAPTEURS DE POSITION

(30) Priorität: 08.07.2015 DE 102015212812
(43) Veröffentlichungstag der Anmeldung: 16.05.2018
(73) Patentinhaber: Vitesco Technologies Germany GmbH, 93055 Regensburg (DE)
(72) Erfinder: SCHNELL, Andreas, 91126 Kammerstein (DE); WINKLER, Michael, 91056 Erlangen (DE); IORDACHE, Emanoil, 227125 Corcova-Mehedinti (RO)
(74) Vertreter: Vitesco Technologies
(86) Internationale Anmeldenummer: PCT/EP2016/065880
(87) Internationale Veröffentlichungsnummer: WO 2017/005755

(56) Entgegenhaltungen:
- DE-A1- 3 641 538
- DE-A1- 10 338 211
- DE-A1-102010 053 468
- DE-A1-102012 222 316
- US-A1- 2005 216 225

## Beschreibung

Die Erfindung betrifft ein Verfahren zum Betrieb einer rotierenden elektrischen Maschine mit einem Rotor, einer mehrphasigen Erregerwicklung und einer Kommutierungsvorrichtung zur Kommutierung von Erregerwicklungsströmen der Erregerwicklung in Abhängigkeit von Rotorstellungswerten für Rotorstellungen des Rotors. Ferner betrifft die Erfindung eine Messvorrichtung zur Durchführung des Verfahrens.

Bekannte Kommutierungsverfahren zur Steuerung und Regelung mehrphasiger rotierender elektrischer Maschinen sind die so genannte Sinuskommutierung und die so genannte Blockkommutierung. Bei der Sinuskommutierung werden gegeneinander phasenverschobene, jeweils wenigstens näherungsweise sinusförmige Erregerwicklungsströme erzeugt. Bei der Blockkommutierung werden Erregerwicklungsströme erzeugt, die ebenfalls gegeneinander phasenverschobene Verläufe aufweisen, jedoch jeweils während einer Kommutierungsperiode näherungsweise konstant sind und sich beim Übergang zwischen den Kommutierungsperioden näherungsweise sprunghaft ändern.

Eine Sinuskommutierung ermöglicht insbesondere bei niedrigen Rotordrehzahlen genauere Regelungen der Rotorstellungen und bessere Gleichlauf- und Anlaufeigenschaften einer elektrischen Maschine als eine Blockkommutierung, erfordert jedoch eine aufwändigere Elektronik als eine Blockkommutierung. Bei hohen Rotordrehzahlen hat eine Blockkommutierung in der Regel gegenüber einer Sinuskommutierung kaum Nachteile, ist jedoch kostengünstiger realisierbar als eine Sinuskommutierung.

Daher wird eine Sinuskommutierung häufig nur bei niedrigen Rotordrehzahlen eingesetzt, bei denen die Rotorstellungen mittels einer hochauflösenden Sensorvorrichtung erfasst werden, die relativ kostengünstig, jedoch für hohe Rotordrehzahlen zu langsam ist. Bei höheren Rotordrehzahlen wird dagegen bevorzugt eine Blockkommutierung eingesetzt. Wenn eine Sinuskommutierung bei niedrigen Rotordrehzahlen mit einer Blockkommutierung bei höheren Rotordrehzahlen kombiniert wird, wird beispielsweise bei dem Erreichen einer vorgegebenen Mindestdrehzahl zwischen Sinuskommutierung und Blockkommutierung umgeschaltet.

US 2005/216225 A1 offenbart eine Vorrichtung und ein Verfahren zur Ermittlung von Rotorstellungen einer Synchronmaschine, bei denen die Rotorstellungen durch sensorlose Berechnungstechniken ermittelt werden.

DE 10 2010 053468 A1 offenbart ein Verfahren zur Bestimmung der Position der Läufer, insbesondere Drehposition des Rotors, einer elektrischen Maschine, wobei nach einer ersten Messmethode ein erster Messwert der Position ermittelt wird, nach wenigstens einer weiteren Messmethode gleichzeitig ein weiterer Messwert ermittelt wird und aus den Messwerten ein gemittelter Wert der Position des Läufers bestimmt wird.

DE 10 2012 222316 A1 offenbart eine Sensorvorrichtung zur Bestimmung mindestens einer Rotationseigenschaft eines rotierenden Elements mit einem ferromagnetischen Inkrementträger, zwei Magnetsensoren und/oder einem Hall-Element.

DE 36 41 538 A1 offenbart eine Einrichtung zum Erfassen der Drehzahl eines BLDC mit zwei Drehzahlsensoren, welche optimiert sind für unterschiedliche Drehzahlbereiche, und einer Unschalteinrichtung. Die Unschalteinrichtung schaltet entsprechend dem Drehzahlbereich den entsprechenden Sensor ein.

Der Erfindung liegt die Aufgabe zugrunde, ein verbessertes Verfahren zum Betrieb einer rotierenden elektrischen Maschine mit einem Rotor, einer mehrphasigen Erregerwicklung und einer Kommutierungsvorrichtung zur Kommutierung von Erregerwicklungsströmen der Erregerwicklung in Abhängigkeit von Rotorstellungswerten für Rotorstellungen des Rotors anzugeben. Ferner liegt der Erfindung die Aufgabe zugrunde, eine Vorrichtung zur Durchführung des Verfahrens anzugeben.

Die Aufgabe wird erfindungsgemäß hinsichtlich des Verfahrens durch die Merkmale des Anspruchs 1 und hinsichtlich der Vorrichtung durch die Merkmale des Anspruchs 10 gelöst.

Vorteilhafte Ausgestaltungen der Erfindung sind Gegenstand der Unteransprüche.

Das erfindungsgemäße Verfahren betrifft den Betrieb einer rotierenden elektrischen Maschine mit einem Rotor, einem Stator mit einer mehrphasigen Erregerwicklung und einer Kommutierungsvorrichtung zur Kommutierung von Erregerwicklungsströmen der Erregerwicklung in Abhängigkeit von Rotorstellungswerten für Rotorstellungen des Rotors. Bei dem Verfahren werden mittels einer ersten Sensorvorrichtung erste Messwerte für die Rotorstellungen und mittels einer zweiten Sensorvorrichtung zweite Messwerte für die Rotorstellungen erfasst. Die Rotorstellungswerte für die Kommutierung der Erregerwicklungsströme werden aus gewichteten Mittelwerten der ersten Messwerte und der zweiten Messwerte gebildet. Dabei weist die erste Sensorvorrichtung in einem ersten Drehzahlbereich von Rotordrehzahlen des Rotors eine höhere Auflösung der Rotorstellungen als die zweite Sensorvorrichtung auf, und die ersten Messwerte werden in dem ersten Drehzahlbereich bei der Bildung der gewichteten Mittelwerte stärker als die zweiten Messwerte gewichtet. Wobei die erste Sensorvorrichtung wenigstens einen magnetoresistiven Sensor oder einen Hallsensor als Winkellagesensor zur Erfassung der ersten Messwerte (A) für die Rotorstellungen umfasst, und wobei die zweite Sensorvorrichtung wenigstens drei Hallschalter mit einer Winkelauflösung von etwa 60 Grad für die Rotorstellungen umfasst.

Unter einer Rotordrehzahl wird hier eine Anzahl von Umdrehungen pro Zeiteinheit des Rotors der elektrischen Maschine verstanden, wobei diese Anzahl nicht negativ ist, d. h. es wird nicht, beispielsweise durch ein Vorzeichen der Rotordrehzahl, zwischen verschiedenen Drehrichtungen des Rotors unterschieden.

Das Verfahren sieht also vor, zur Ermittlung von Rotorstellungen des Rotors einer rotierenden elektrischen Maschine zwei Sensorvorrichtungen mit unterschiedlichen Auflösungsvermögen einzusetzen und die von den beiden Sensorvorrichtungen erfassten Messwerte geeignet zu kombinieren. Dazu werden in einem Drehzahlbereich, in dem eine erste Sensorvorrichtung eine höhere Auflösung als die zweite Sensorvorrichtung hat, von der ersten Sensorvorrichtung erfasste erste Messwerte bei der Bildung der gewichteten Mittelwerte stärker gewichtet als von der zweiten Sensorvorrichtung erfasste zweite Messwerte. Das erfindungsgemäße Verfahren ermöglicht damit insbesondere, bei niedrigen Rotordrehzahlen die Messwerte einer die Rotorstellungen höher auflösenden ersten Sensorvorrichtung stärker zu gewichten als die Messwerte der zweiten Sensorvorrichtung, während bei höheren Rotordrehzahlen die Messwerte der zweiten Sensorvorrichtung stärker gewichtet werden. Dadurch können die Vorteile einer ersten Sensorvorrichtung mit einer hohen Auflösung der Rotorstellungen bei niedrigen Rotordrehzahlen und einer kostengünstigeren zweiten Sensorvorrichtung mit einer schwächeren Auflösung der Rotorstellungen bei hohen Rotordrehzahlen kombiniert werden. Die Bildung gewichteter Mittelwerte aus den ersten und zweiten Messwerten ermöglicht es vorteilhaft, die relative Gewichtung der ersten und zweiten Messwerten in Abhängigkeit von der Rotordrehzahl zu variieren und dadurch ein hartes Umschalten zwischen der Verwendung der ersten und zweiten Messwerte zu vermeiden, welches zu Drehmomentsprüngen und daraus resultierenden Geräuschentwicklungen führen kann.

Eine Ausgestaltung der Erfindung sieht dementsprechend vor, dass der erste Drehzahlbereich von der Drehzahl Null begrenzt wird. Dadurch werden vorteilhaft bei niedrigen Rotordrehzahlen, bei denen eine hohe Auflösung der Rotorstellungen benötigt wird, die Messwerte einer ersten Sensorvorrichtung mit einer hohen Auflösung der Rotorstellungen stärker gewichtet.

Eine weitere Ausgestaltung der Erfindung sieht vor, dass die zweite Sensorvorrichtung eine höhere Verarbeitungsgeschwindigkeit von Sensorsignalen als die erste Sensorvorrichtung aufweist. Auch diese Ausgestaltung ist darauf gerichtet, dass die zweite Sensorvorrichtung vorwiegend auf die Erfassung von Messwerten bei hohen Rotordrehzahlen, die eine schnellere Verarbeitung von Sensorsignalen erfordern, ausgelegt ist.

Eine weitere Ausgestaltung der Erfindung sieht vor, dass eine Gewichtung der ersten Messwerte bei der Bildung der gewichteten Mittelwerte eine monoton fallende und zumindest teilweise streng monoton fallende Funktion der Rotordrehzahl ist. Dementsprechend sieht eine weitere Ausgestaltung der Erfindung vor, dass eine Gewichtung der zweiten Messwerte bei der Bildung der gewichteten Mittelwerte eine monoton steigende und zumindest teilweise streng monoton steigende Funktion der Rotordrehzahl ist, die bei der Drehzahl Null verschwindet. Gemäß einer weiteren Ausgestaltung der Erfindung wird ferner ein Drehzahlschwellenwert vorgegeben und eine Gewichtung der ersten Messwerte bei der Bildung der gewichteten Mittelwerte derart gebildet, dass sie bei Rotordrehzahlen oberhalb des Drehzahlschwellenwerts verschwindet.

Die vorgenannten Ausgestaltungen sehen vor, die Gewichtungen der ersten und zweiten Messwerte in Abhängigkeit von der Rotordrehzahl derart zu variieren, dass die Gewichtung der zweiten Messwerte gegenüber der Gewichtung der ersten Messwerte mit zunehmender Rotordrehzahl zunimmt. Insbesondere sehen Ausgestaltungen der Erfindung vor, dass die zweiten Messwerte bei der Rotordrehzahl Null und die ersten Messwerte oberhalb eines Drehzahlschwellenwertes gar nicht zu den gewichteten Mittelwerten beitragen. Dadurch wird vorteilhaft ermöglicht, die Rotorstellungswerte bei niedrigen Rotordrehzahlen hauptsächlich oder ausschließlich aus den ersten Messwerten einer ersten Sensorvorrichtung mit einer hohen Auflösung der Rotorstellungen und bei hohen Rotordrehzahlen hauptsächlich oder ausschließlich aus den zweiten Messwerten einer zweiten Sensorvorrichtung mit einer geringeren Auflösung der Rotorstellungen zu bilden und den Anteil der zweiten Messwerte an den gewichteten Mittelwerten mit zunehmender Rotordrehzahl gegenüber dem Anteil der ersten Messwerte zu steigern. Dies berücksichtigt, dass in der Regel nur für niedrige Rotordrehzahlen eine hohe Auflösung der Rotorstellungen für die Regelung der Kommutierung der Erregerwicklungsströme benötigt wird. Durch die Verwendung der Messwerte der zweiten Sensorvorrichtung bei hohen Rotordrehzahlen wird vermieden, dass eine kostspielige erste Sensorvorrichtung benötigt wird, die sich auch bei hohen Rotordrehzahlen zur Erfassung von Messwerten mit einer hohen Auflösung der Rotorstellungen eignet.

Eine weitere Ausgestaltung der Erfindung sieht vor, dass Rotordrehzahlen des Rotors aus den erfassten ersten Messwerten und/oder zweiten Messwerten ermittelt werden. Diese Ausgestaltung der Erfindung sieht also vor, nicht nur die Rotorstellungswerte, sondern auch die Rotordrehzahlen des Rotors aus den ersten und/oder zweiten Messwerten zu ermitteln. Dadurch wird vorteilhaft kein separater Inkrementalgeber zur Erfassung der Rotordrehzahlen benötigt.

Eine weitere Ausgestaltung der Erfindung sieht vor, dass die gewichteten Mittelwerte der ersten Messwerte und der zweiten Messwerte geglättet werden und die Rotorstellungswerte als die geglätteten gewichteten Mittelwerte gebildet werden. Die Glättung erfolgt dabei vorzugsweise durch eine Tiefpassfilterung der gewichteten Mittelwerte.

Diese Ausgestaltung der Erfindung dient dazu, die gewichteten Mittelwerte erforderlichenfalls zu glätten, um sie als Rotorstellungswerte für eine Sinuskommutierung der Erregerwicklungsströme verwenden zu können. Eine derartige Glättung ist insbesondere bei hohen Rotordrehzahlen erforderlich, wenn die zweite Sensorvorrichtung eine nur sehr grobe Auflösung der Rotorstellungen aufweist wie es beispielsweise im Falle von üblichen Sensorvorrichtungen mit Hallschaltern mit einer Winkelauflösung von etwa 60 Grad für die Rotorstellungen der Fall ist.

Eine weitere Ausgestaltung der Erfindung sieht vor, dass die Kommutierung der Erregerwicklungsströme mittels der Kommutierungsvorrichtung für alle Rotordrehzahlen als eine Sinuskommutierung ausgeführt wird. Die Sinuskommutierung der Erregerwicklungsströme wird beispielsweise mittels einer durch eine Raumzeigermodulation gesteuerte Pulsweitenmodulation erzeugt. Diese Ausgestaltung der Erfindung vermeidet vorteilhaft, dass zwei verschiedene Kommutierungsverfahren verwendet werden und implementiert werden müssen, beispielsweise eine Sinuskommutierung bei niedrigen und eine Blockkommutierung bei hohen Rotordrehzahlen. Insbesondere wird ein Umschalten zwischen diesen beiden Kommutierungsverfahren vermieden, das zu Drehmomentsprüngen und daraus resultierenden Geräuschentwicklungen führen kann.

Eine erfindungsgemäße Messvorrichtung zur Durchführung des erfindungsgemäßen Verfahrens, die Messvorrichtung umfasst eine erste

Sensorvorrichtung zur Erfassung der ersten Messwerte für die Rotorstellungen, eine zweite Sensorvorrichtung zur Erfassung der zweiten Messwerte für die Rotorstellungen und eine Auswerteeinheit, die dazu ausgebildet ist, die Rotorstellungswerte für die Kommutierung der Erregerwicklungsströme aus gewichteten Mittelwerten der ersten Messwerte und der zweiten Messwerte zu bilden. Dabei weist die erste Sensorvorrichtung in dem ersten Drehzahlbereich von Rotordrehzahlen des Rotors eine höhere Auflösung der Rotorstellungen als die zweite Sensorvorrichtung auf, wobei die erste Sensorvorrichtung wenigstens einen magnetoresistiven Sensor oder einen Hallsensor als Winkellagesensor zur Erfassung der ersten Messwerte (A) für die Rotorstellungen umfasst, und wobei die zweite Sensorvorrichtung wenigstens drei Hallschalter mit einer Winkelauflösung von etwa 60 Grad für die Rotorstellungen umfasst, und die Auswerteeinheit ist dazu ausgebildet, die ersten Messwerte in dem ersten Drehzahlbereich bei der Bildung der gewichteten Mittelwerte stärker als die zweiten Messwerte zu gewichten und die von ihr gebildeten Rotorstellungswerte an die Kommutierungsvorrichtung auszugeben.

Erfindungsgemäß umfasst die erste Sensorvorrichtung wenigstens einen Winkellagesensor zur Erfassung der ersten Messwerte für die Rotorstellungen, und/oder die zweite Sensorvorrichtung umfasst wenigstens drei Hallschalter mit einer Winkelauflösung von etwa 60 Grad für die Rotorstellungen. Geeignete Winkellagesensoren der ersten Sensorvorrichtung sind beispielsweise magnetoresistive Sensoren, deren Messprinzip auf dem GMR-Effekt (GMR = Giant Magnetoresistance) oder AMR-Effekt (anisotroper magnetoresistiver Effekt) basiert, oder Hallsensoren. Derartige Winkellagesensoren und Hallschalter sind bewährte und kommerziell verfügbare Sensoren zur Erfassung von Rotorstellungen und eignen sich daher insbesondere als Sensoren für die erste Sensorvorrichtung bzw. zweite Sensorvorrichtung.

Die Auswerteeinheit ist vorzugsweise dazu ausgebildet, Rotordrehzahlen des Rotors aus den erfassten ersten und/oder zweiten Messwerten zu ermitteln. Dadurch wird vorteilhaft kein separater Inkrementalgeber zur Erfassung der Rotordrehzahlen benötigt.

Ferner ist die Auswerteeinheit vorzugsweise dazu ausgebildet, die gewichteten Mittelwerte der ersten Messwerte und der zweiten Messwerte zu glätten und die Rotorstellungswerte als die geglätteten gewichteten Mittelwerte zu bilden. Dies ermöglicht vorteilhaft, die geglätteten gewichteten Mittelwerte als Rotorstellungswerte für eine Sinuskommutierung der Erregerwicklungsströme verwenden zu können, falls die zweite Sensorvorrichtung eine nur sehr grobe Auflösung der Rotorstellungen aufweist wie es beispielsweise im Falle einer zweiten Sensorvorrichtung mit Hallschaltern mit einer Winkelauflösung von etwa 60 Grad für die Rotorstellungen der Fall ist.

Eine erfindungsgemäße rotierende elektrische Maschine umfasst einen Rotor, einen Stator mit einer mehrphasigen Erregerwicklung, eine Kommutierungsvorrichtung zur Kommutierung von Erregerwicklungsströmen der Erregerwicklung in Abhängigkeit von Rotorstellungswerten für Rotorstellungen des Rotors und eine erfindungsgemäße Messvorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein Blockdiagramm einer rotierenden elektrischen Maschine, und
FIG 2 ein Flussdiagramm eines Verfahrens zum Betrieb einer rotierenden elektrischen Maschine.

Einander entsprechende Teile sind in den Figuren mit den gleichen Bezugszeichen versehen.

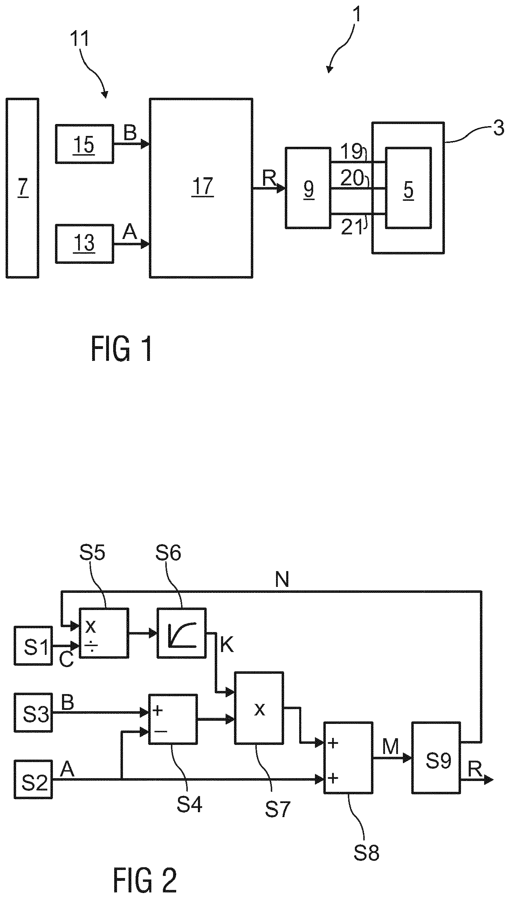

Figur 1 zeigt ein Blockdiagramm einer rotierenden elektrischen Maschine 1, die als ein Elektromotor ausgebildet ist. Die elektrische Maschine 1 umfasst einen Stator 3 mit einer dreiphasigen Erregerwicklung 5, einen Rotor 7, eine Kommutierungsvorrichtung 9 und eine Messvorrichtung 11, die eine erste Sensorvorrichtung 13, eine zweite Sensorvorrichtung 15 und eine Auswerteeinheit 17 umfasst.

Die Kommutierungsvorrichtung 9 ist zur elektronischen Sinuskommutierung der Erregerwicklungsströme der Erregerwicklung 5 in Abhängigkeit von Rotorstellungswerten R für Rotorstellungen des Rotors 7 ausgebildet. In einer typischen und bekannten Ausführung der Kommutierungsvorrichtung 9 umfasst diese für jede Phase der Erregerwicklung 5 eine Halbbrücke, die zwei elektronische Schalteinheiten aufweist und mit einem Außenleiter 19 bis 21 der jeweiligen Phase verbunden ist. Die Sinuskommutierung der Erregerwicklungsströme wird vorzugsweise auf bekannte Weise mittels einer durch eine Raumzeigermodulation gesteuerten Pulsweitenmodulation der Erregerwicklungsströme in Abhängigkeit von den Rotorstellungswerten R erzeugt.

Die Rotorstellungswerte R werden in unten anhand von Figur 2 näher erläuterter Weise von der Auswerteeinheit 17 aus Messwerten A, B für Rotorstellungen des Rotors 7 gebildet und der Kommutierungsvorrichtung 9 zugeführt, wobei erste Messwerte A von der ersten Sensorvorrichtung 13 und zweite Messwerte B von der zweiten Sensorvorrichtung 15 erfasst und jeweils der Auswerteeinheit 17 zugeführt werden.

Die erste Sensorvorrichtung 13 weist bei niedrigen Rotordrehzahlen, d. h. in einem von der Drehzahl Null begrenzten ersten Drehzahlbereich von Rotordrehzahlen des Rotors 7 eine höhere Auflösung der Rotorstellungen als die zweite Sensorvorrichtung 15 auf. Beispielsweise umfasst die erste Sensorvorrichtung 13 wenigstens einen Hallsensor, der zu einer hochauflösenden Erfassung der Rotorstellungen bei niedrigen Rotordrehzahlen ausgebildet ist. Die zweite Sensorvorrichtung 15 umfasst dagegen beispielsweise mehrere Hallschalter mit einer geringeren Winkelauflösung von jeweils etwa 60 Grad für die Rotorstellungen.

Figur 2 zeigt ein Flussdiagramm eines Verfahrens zum Betrieb der rotierenden elektrischen Maschine 1.

In einem ersten Verfahrensschritt S1 wird ein Drehzahlschwellenwert C vorgegeben und gespeichert. In einem zweiten Verfahrensschritt S2 werden mittels der ersten Sensorvorrichtung 13 die ersten Messwerte A erfasst. In einem dritten Verfahrensschritt S3 werden mittels der zweiten Sensorvorrichtung 15 die zweiten Messwerte B erfasst. Dabei werden in aufeinander folgenden Messzeitintervallen jeweils ein erster Messwert A und ein zweiter Messwert B erfasst, d. h. es werden wiederholt und wenigstens annähernd gleichzeitig jeweils ein erster Messwert A und ein zweiter Messwert B erfasst. Im Folgenden werden ein erster Messwert A und ein zweiter Messwert B als zueinander korrespondierend bezeichnet, wenn sie während desselben Messzeitintervalls erfasst werden.

In einem vierten Verfahrensschritt S4 wird für jedes Messzeitintervall eine Differenz B-A des in dem Messzeitintervall erfassten zweiten Messwerts B und des dazu korrespondierenden ersten Messwerts A gebildet.

In einem fünften Verfahrensschritt S5 wird für jedes Messzeitintervall ein Verhältnis N/C eines momentanen Drehzahlwertes N der Rotordrehzahl und des Drehzahlschwellenwertes C gebildet.

In einem sechsten Verfahrensschritt S6 wird in Abhängigkeit von dem in dem fünften Verfahrensschritt S5 gebildeten Verhältnis N/C für jedes Messzeitintervall ein Gewichtungsfaktor K gebildet, der Werte aus dem Intervall [0,1] mit den Intervallgrenzen Null und Eins annimmt. Der Gewichtungsfaktor K ist eine monoton steigende Funktion des Verhältnisses N/C, die für N=0 den Wert Null annimmt, im Bereich kleiner Werte des Verhältnisses N/C annähernd linear zunimmt und für Werte des Verhältnisses N/C, die größer als Eins sind, den Wert Eins annimmt.

In einem siebten Verfahrensschritt S7 wird für jedes Messzeitintervall ein gewichtetes Produkt K(B-A) aus der in dem vierten Verfahrensschritt S4 für das Messzeitintervall gebildeten Differenz B-A und dem in dem sechsten Verfahrensschritt S6 für das Messzeitintervall ermittelten Gewichtungsfaktor K gebildet.

In einem achten Verfahrensschritt S8 wird für jedes Messzeitintervall ein gewichteter Mittelwert M des ersten Messwertes A und des zweiten Messwertes B als Summe M=KB+(1-K)A des in dem dritten Verfahrensschritt S3 während des Messzeitintervalls erfassten ersten Messwertes A und des in dem siebten Verfahrensschritt S7 für das Messzeitintervall gebildeten gewichteten Produkts K (B-A) gebildet. Da der Gewichtungsfaktor K eine monoton steigende Funktion des Verhältnisses N/C und damit auch des Drehzahlwertes N ist, ist die Gewichtung der ersten Messwerte A bei der Bildung der gewichteten Mittelwerte M eine monoton fallende Funktion des Drehzahlwertes N, während die Gewichtung der zweiten Messwerte B bei der Bildung der gewichteten Mittelwerte M eine monoton steigende Funktion des Drehzahlwertes N ist. Da der Gewichtungsfaktor K bei N=0 den Wert Null annimmt, sind die gewichteten Mittelwerte M bei N=0 mit den jeweiligen ersten Messwerten A identisch. Da der Gewichtungsfaktor K für N>C den Wert Eins annimmt, sind die gewichteten Mittelwerte M für N>C mit den jeweiligen zweiten Messwerten B identisch. Die Anteile der ersten Messwerte A an den gewichteten Mittelwerten M nehmen also mit zunehmender Rotordrehzahl zwischen N=0 und N=C ab und verschwinden für Drehzahlwerte N, die den Drehzahlschwellenwert C überschreiten. Die Anteile der zweiten Messwerte B an den gewichteten Mittelwerten M verschwinden bei N=0 und nehmen zwischen N=0 und N=C zu.

In einem neunten Verfahrensschritt S9 wird für jedes Messzeitintervall der in dem achten Verfahrensschritt S8 gebildete gewichtete Mittelwert M geglättet und als Rotorstellungswert R an die Kommutierungsvorrichtung 9 ausgegeben. Die Glättung wird als eine Tiefpassfilterung der gewichteten Mittelwerte M durchgeführt, so dass die resultierenden Rotorstellungswerte R als Eingangssignale für eine Sinuskommutierung der Erregerwicklungsströme verwendet werden können.

Optional werden in dem neunten Verfahrensschritt S9 außerdem aus den gewichteten Mittelwerten M die Drehzahlwerte N ermittelt, die in dem ersten Verfahrensschritt S1 verwendet werden. Alternativ dazu werden die Drehzahlwerte N nicht aus den gewichteten Mittelwerten M ermittelt, sondern mittels eines separaten (in Figur 1 nicht dargestellten) Inkrementalgebers erfasst.

Die Verfahrensschritte S4 bis S9 werden von der Auswerteeinheit 17 ausgeführt und durch eine Software oder speicherprogrammierbare Steuerung realisiert.

### Bezugszeichenliste

- 1: elektrische Maschine
- 3: Stator
- 5: Erregerwicklung
- 7: Rotor
- 9: Kommutierungsvorrichtung
- 11: Messvorrichtung
- 13: erste Sensorvorrichtung
- 15: zweite Sensorvorrichtung
- 17: Auswerteeinheit
- 19 bis 21: Außenleiter
- S1 bis S9: Verfahrensschritt
- A: erster Messwert
- B: zweiter Messwert
- C: Drehzahlschwellenwert
- K: Gewichtungsfaktor
- M: gewichteter Mittelwert
- N: Drehzahlwert
- R: Rotorstellungswert

## Patentansprüche

1. Verfahren zum Betrieb einer rotierenden elektrischen Maschine (1) mit einem Rotor (7), einem Stator (3) mit einer mehrphasigen Erregerwicklung (5) und einer Kommutierungsvorrichtung (9) zur Kommutierung von Erregerwicklungsströmen der Erregerwicklung (5) in Abhängigkeit von Rotorstellungswerten (R) für Rotorstellungen des Rotors (7), wobei
- mittels einer ersten Sensorvorrichtung (13) erste Messwerte (A) für die Rotorstellungen erfasst werden,
- mittels einer zweiten Sensorvorrichtung (15) zweite Messwerte (B) für die Rotorstellungen erfasst werden,
- und die Rotorstellungswerte (R) für die Kommutierung der Erregerwicklungsströme aus gewichteten Mittelwerten (M) der ersten Messwerte (A) und der zweiten Messwerte (B) gebildet werden,
- wobei die erste Sensorvorrichtung (13) in einem ersten Drehzahlbereich von Rotordrehzahlen des Rotors (7) eine höhere Auflösung der Rotorstellungen als die zweite Sensorvorrichtung (15) aufweist,
- und wobei die ersten Messwerte (A) in dem ersten Drehzahlbereich bei der Bildung der gewichteten Mittelwerte (M) stärker als die zweiten Messwerte (B) gewichtet werden, **dadurch gekennzeichnet, dass** die erste Sensorvorrichtung (13) wenigstens einen magnetoresistiven Sensor oder einen Hallsensor als Winkellagesensor zur Erfassung der ersten Messwerte (A) für die Rotorstellungen umfasst, und
- wobei die zweite Sensorvorrichtung (15) wenigstens drei Hallschalter mit einer Winkelauflösung von etwa 60 Grad für die Rotorstellungen umfasst.

2. Verfahren nach Anspruch 1,
**dadurch gekennzeichnet, dass** der erste Drehzahlbereich von der Drehzahl Null begrenzt wird.

3. Verfahren nach einem der vorhergehenden Ansprüche, **dadurch gekennzeichnet, dass** eine Gewichtung der ersten Messwerte (A) bei der Bildung der gewichteten Mittelwerte (M) eine monoton fallende und zumindest teilweise streng monoton fallende Funktion der Rotordrehzahl ist.

4. Verfahren nach einem der vorhergehenden Ansprüche, **dadurch gekennzeichnet, dass** eine Gewichtung der zweiten Messwerte (B) bei der Bildung der gewichteten Mittelwerte (M) eine monoton steigende und zumindest teilweise streng monoton steigende Funktion der Rotordrehzahl ist, die bei der Drehzahl Null verschwindet.

5. Verfahren nach einem der vorhergehenden Ansprüche, **dadurch gekennzeichnet, dass** ein Drehzahlschwellenwert (C) vorgegeben wird und eine Gewichtung der ersten Messwerte (A) bei der Bildung der gewichteten Mittelwerte (M) bei Rotordrehzahlen oberhalb des Drehzahlschwellenwerts (C) verschwindet.

6. Verfahren nach einem der vorhergehenden Ansprüche, **dadurch gekennzeichnet, dass** Rotordrehzahlen des Rotors (7) aus den erfassten ersten Messwerten (A) und/oder zweiten Messwerten (B) ermittelt werden.

7. Verfahren nach einem der vorhergehenden Ansprüche, **dadurch gekennzeichnet, dass** die gewichteten Mittelwerte (M) der ersten Messwerte (A) und der zweiten Messwerte (B) geglättet werden und die Rotorstellungswerte (R) als die geglätteten gewichteten Mittelwerte (M) gebildet werden.

8. Verfahren nach einem der vorhergehenden Ansprüche, **dadurch gekennzeichnet, dass** die Kommutierung der Erregerwicklungsströme mittels der Kommutierungsvorrichtung (9) für alle Rotordrehzahlen als eine Sinuskommutierung ausgeführt wird.

9. Verfahren nach Anspruch 8,
**dadurch gekennzeichnet, dass** die Sinuskommutierung der Erregerwicklungsströme mittels einer durch eine Raumzeigermodulation gesteuerten Pulsweitenmodulation erzeugt wird.

10. Messvorrichtung (11) zur Durchführung des Verfahrens gemäß einem der vorhergehenden Ansprüche, umfassend
- eine erste Sensorvorrichtung (13) zur Erfassung der ersten Messwerte (A) für die Rotorstellungen,
- eine zweite Sensorvorrichtung (15) zur Erfassung der zweiten Messwerte (B) für die Rotorstellungen und
- eine Auswerteeinheit (17), die dazu ausgebildet ist, die Rotorstellungswerte (R) für die Kommutierung der Erregerwicklungsströme aus gewichteten Mittelwerten (M) der ersten Messwerte (A) und der zweiten Messwerte (B) zu bilden,
- wobei die erste Sensorvorrichtung (13) in dem ersten Drehzahlbereich von Rotordrehzahlen des Rotors (7) eine höhere Auflösung der Rotorstellungen als die zweite Sensorvorrichtung (15) aufweist,
- wobei die erste Sensorvorrichtung (13) wenigstens einen magnetoresistiven Sensor oder einen Hallsensor als Winkellagesensor zur Erfassung der ersten Messwerte (A) für die Rotorstellungen umfasst, und
- wobei die zweite Sensorvorrichtung (15) wenigstens drei Hallschalter mit einer Winkelauflösung von etwa 60 Grad für die Rotorstellungen umfasst,
- und wobei die Auswerteeinheit (17) dazu ausgebildet ist, die ersten Messwerte (A) in dem ersten Drehzahlbereich bei der Bildung der gewichteten Mittelwerte (M) stärker als die zweiten Messwerte (B) zu gewichten
- und die von ihr gebildeten Rotorstellungswerte (R) an die Kommutierungsvorrichtung (9) auszugeben.

11. Messvorrichtung (11) nach Anspruch 10,
**dadurch gekennzeichnet, dass** die Auswerteeinheit (17) dazu ausgebildet ist, Rotordrehzahlen des Rotors (7) aus den erfassten ersten Messwerten (A) und/oder zweiten Messwerten (B) zu ermitteln.

12. Messvorrichtung (11) nach Anspruch 10 oder 11
**dadurch gekennzeichnet, dass** die Auswerteeinheit (17) dazu ausgebildet ist, die gewichteten Mittelwerte (M) der ersten Messwerte (A) und der zweiten Messwerte (B) zu glätten und die Rotorstellungswerte (R) als die geglätteten gewichteten Mittelwerte (M) zu bilden.

13. Rotierende elektrische Maschine (1), umfassend
- einen Rotor (7),
- einen Stator (3) mit einer mehrphasigen Erregerwicklung (5),
- eine Kommutierungsvorrichtung (9) zur Kommutierung von Erregerwicklungsströmen der Erregerwicklung (5) in Abhängigkeit von Rotorstellungswerten (R) für Rotorstellungen des Rotors (7)
- und eine Messvorrichtung (11) gemäß einem der Ansprüche 10 bis 12.

## Claims

1. Method for operating a rotating electric machine (1) having a rotor (7), a stator (3) having a polyphase excitation winding (5) and a commutation apparatus (9) for commutating excitation winding currents of the excitation winding (5) depending on rotor position values (R) for rotor positions of the rotor (7), wherein
- first measurement values (A) for the rotor positions are detected by means of a first sensor apparatus (13),
- second measurement values (B) for the rotor positions are detected by means of a second sensor apparatus (15),
- and, for the commutation of the excitation winding currents, the rotor position values (R) are formed from weighted mean values (M) of the first measurement values (A) and the second measurement values (B),
- wherein, in a first rotation speed range of rotor rotation speeds of the rotor (7), the first sensor apparatus (13) has a higher resolution of the rotor positions than the second sensor apparatus (15),
- and wherein, in the first rotation speed range, the first measurement values (A) are given more weight than the second measurement values (B) when forming the weighted mean values (M),
**characterized in that**
the first sensor apparatus (13) comprises at least one magnetoresistive sensor or a Hall sensor as angle position sensor for detecting the first measurement values (A) for the rotor positions, and
- wherein the second sensor apparatus (15) comprises at least three Hall sensors with an angle resolution of approximately 60 degrees for the rotor positions.

2. Method according to Claim 1,
**characterized in that** the first rotation speed range is limited by the rotation speed of zero.

3. Method according to either of the preceding claims, **characterized in that**, when forming the weighted mean values (M), a weighting of the first measurement values (A) is a monotonically falling and at least partially strictly monotonically falling function of the rotor rotation speed.

4. Method according to one of the preceding claims, **characterized in that**, when forming the weighted mean values (M), a weighting of the second measurement values (B) is a monotonically increasing and at least partially strictly monotonically increasing function of the rotor rotation speed, said function disappearing at the rotation speed of zero.

5. Method according to one of the preceding claims, **characterized in that** a rotation speed threshold value (C) is prescribed and, when forming the weighted mean values (M), a weighting of the first measurement values (A) disappears at rotor rotation speeds above the rotation speed threshold value (C).

6. Method according to one of the preceding claims, **characterized in that** rotor rotation speeds of the rotor (7) are determined from the detected first measurement values (A) and/or second measurement values (B).

7. Method according to one of the preceding claims, **characterized in that** the weighted mean values (M) of the first measurement values (A) and the second measurement values (B) are smoothed and the rotor position values (R) are formed as the smoothed weighted mean values (M).

8. Method according to one of the preceding claims, **characterized in that** the commutation of the excitation winding currents by means of the commutation apparatus (9) is carried out as sinusoidal commutation for all rotor rotation speeds.

9. Method according to Claim 8,
**characterized in that** the sinusoidal commutation of the excitation winding currents is generated by means of a pulse-width modulation controlled by a space vector modulation.

10. Measurement apparatus (11) for carrying out the method according to one of the preceding claims, comprising
- a first sensor apparatus (13) for detecting the first measurement values (A) for the rotor positions,
- a second sensor apparatus (15) for detecting the second measurement values (B) for the rotor positions and
- an evaluation unit (17), which is configured to form the rotor position values (R) for the commutation of the excitation winding currents from weighted mean values (M) of the first measurement values (A) and the second measurement values (B),
- wherein, in the first rotation speed range of rotor rotation speeds of the rotor (7), the first sensor apparatus (13) has a higher resolution of the rotor positions than the second sensor apparatus (15),
- wherein the first sensor apparatus (13) comprises at least one magnetoresistive sensor or a Hall sensor as angle position sensor for detecting the first measurement values (A) for the rotor positions, and
- wherein the second sensor apparatus (15) comprises at least three Hall sensors with an angle resolution of approximately 60 degrees for the rotor positions,
- and wherein, in the first rotation speed range, the evaluation unit (17) is configured to give more weight to the first measurement values (A) than the second measurement values (B) when forming the weighted mean values (M)
- and to output the rotor position values (R) formed by said evaluation unit to the commutation apparatus (9).

11. Measurement apparatus (11) according to Claim 10, **characterized in that** the evaluation unit (17) is configured to determine rotor rotation speeds of the rotor (7) from the detected first measurement values (A) and/or second measurement values (B).

12. Measurement apparatus (11) according to Claim 10 or 11, **characterized in that** the evaluation unit (17) is configured to smooth the weighted mean values (M) of the first measurement values (A) and the second measurement values (B) and to form the rotor position values (R) as the smoothed weighted mean values (M).

13. Rotating electric machine (1), comprising
- a rotor (7),
- a stator (3) having a polyphase excitation winding (5),
- a commutation apparatus (9) for commutating excitation winding currents of the excitation winding (5) depending on rotor position values (R) for rotor positions of the rotor (7)
- and a measurement apparatus (11) according to one of Claims 10 to 12.

## Revendications

1. Procédé permettant de faire fonctionner une machine électrique tournante (1) comprenant un rotor (7), un stator (3) pourvu d'un enroulement d'excitation polyphasé (5) et un dispositif de commutation (9) servant à la commutation de courants d'enroulement d'excitation de l'enroulement d'excitation (5) en fonction de valeurs de position de rotor (R) pour des positions de rotor du rotor (7), dans lequel
- un premier dispositif capteur (13) détecte des premières valeurs de mesure (A) pour les positions de rotor,
- un deuxième dispositif capteur (15) détecte des deuxièmes valeurs de mesure (B) pour les positions de rotor,
- et les valeurs de position de rotor (R) sont formées pour la commutation des courants d'enroulement d'excitation à partir de moyennes pondérées (M) des premières valeurs de mesure (A) et des deuxièmes valeurs de mesure (B),
- le premier dispositif capteur (13) présentant dans une première plage de vitesse de rotation de valeurs de vitesse de rotation du rotor (7) une plus haute résolution des positions de rotor que le deuxième dispositif capteur (15),
- et les premières valeurs de mesure (A) dans la première plage de vitesse de rotation étant pondérées plus fortement que les deuxièmes valeurs de mesure (B) lors de la formation des moyennes pondérées (M), **caractérisé en ce que** le premier dispositif capteur (13) comprend au moins un capteur magnétorésistif ou un capteur à effet Hall comme capteur de position angulaire servant à la détection des premières valeurs de mesure (A) pour les positions de rotor, et
- le deuxième dispositif capteur (15) comprenant au moins trois capteurs à effet Hall ayant une résolution angulaire d'environ 60 degrés pour les positions de rotor.

2. Procédé selon la revendication 1, **caractérisé en ce que** la première plage de vitesse de rotation est délimitée par la vitesse de rotation zéro.

3. Procédé selon l'une quelconque des revendications précédentes, **caractérisé en ce qu'**une pondération des premières valeurs de mesure (A) lors de la formation des moyennes pondérées (M) est une fonction décroissante de façon monotone et au moins partiellement décroissante de façon strictement monotone de la vitesse de rotation de rotor.

4. Procédé selon l'une quelconque des revendications précédentes, **caractérisé en ce qu'**une pondération des deuxièmes valeurs de mesure (B) lors de la formation des moyennes pondérées (M) est une fonction croissante de façon monotone et au moins partiellement croissante de façon strictement monotone de la vitesse de rotation de rotor qui disparaît à la vitesse de rotation zéro.

5. Procédé selon l'une quelconque des revendications précédentes, **caractérisé en ce qu'**une valeur seuil de vitesse de rotation (C) est prédéfinie et une pondération des premières valeurs de mesure (A) disparaît lors de la formation des moyennes pondérées (M) pour des vitesses de rotation de rotor au-dessus de la valeur seuil de vitesse de rotation (C).

6. Procédé selon l'une quelconque des revendications précédentes, **caractérisé en ce que** des vitesses de rotation de rotor du rotor (7) sont déterminées à partir des premières valeurs de mesure (A) et/ou des deuxièmes valeurs de mesure (B) détectées.

7. Procédé selon l'une quelconque des revendications précédentes, **caractérisé en ce que** les moyennes pondérées (M) des premières valeurs de mesure (A) et des deuxièmes valeurs de mesure (B) sont lissées, et les valeurs de position de rotor (R) sont formées comme les moyennes pondérées (M) lissées.

8. Procédé selon l'une quelconque des revendications précédentes, **caractérisé en ce que** la commutation des courants d'enroulement d'excitation est effectuée au moyen du dispositif de commutation (9) pour toutes les vitesses de rotation de rotor comme une commutation sinusoïdale.

9. Procédé selon la revendication 8, **caractérisé en ce que** la commutation sinusoïdale des courants d'enroulement d'excitation est produite au moyen d'une modulation d'impulsions en largeur commandée par une modulation de vecteur spatial.

10. Dispositif de mesure (11) permettant d'exécuter le procédé selon l'une quelconque des revendications précédentes, comprenant
- un premier dispositif capteur (13) servant à détecter les premières valeurs de mesure (A) pour les positions de rotor,
- un deuxième dispositif capteur (15) servant à détecter les deuxièmes valeurs de mesure (B) pour les positions de rotor, et
- une unité d'évaluation (17) qui est réalisée pour former les valeurs de position de rotor (R) pour la commutation des courants d'enroulement d'excitation à partir de moyennes pondérées (M) des premières valeurs de mesure (A) et des deuxièmes valeurs de mesure (B),
- le premier dispositif capteur (13) présentant dans la première plage de vitesse de rotation des vitesses de rotation de rotor du rotor (7) une meilleure résolution des positions de rotor que le deuxième dispositif capteur (15),
- le premier dispositif capteur (13) comprenant au moins un capteur magnétorésistif ou un capteur à effet Hall en tant que capteur de position angulaire servant à détecter les premières valeurs de mesure (A) pour les positions de rotor, et
- le deuxième dispositif capteur (15) comprenant au moins trois commutateurs à effet Hall ayant une résolution angulaire d'environ 60 degrés pour les positions de rotor,
- et l'unité d'évaluation (17) étant réalisée pour pondérer les premières valeurs de mesure (A) dans la première plage de vitesse de rotation plus fortement que les deuxièmes valeurs de mesure (B) lors de la formation des moyennes pondérées (M),
- et pour sortir au dispositif de commutation (9) les valeurs de position de rotor (R) formées par celle-ci.

11. Dispositif de mesure (11) selon la revendication 10, **caractérisé en ce que** l'unité d'évaluation (17) est réalisée pour déterminer des vitesses de rotation de rotor du rotor (7) à partir des premières valeurs de mesure (A) et/ou des deuxièmes valeurs de mesure (B) détectées.

12. Dispositif de mesure (11) selon la revendication 10 ou 11, **caractérisé en ce que** l'unité d'évaluation (17) est réalisée pour lisser les moyennes pondérées (M) des premières valeurs de mesure (A) et des deuxièmes valeurs de mesure (B) et pour former les valeurs de position de rotor (R) comme les moyennes pondérées (M) lissées.

13. Machine électrique tournante (1), comprenant
- un rotor (7),
- un stator (3) comportant un enroulement d'excitation polyphasé (5),
- un dispositif de commutation (9) servant à la commutation de courants d'enroulement d'excitation de l'enroulement d'excitation (5) en fonction de valeurs de position de rotor (R) pour des positions de rotor du rotor (7),
- et un dispositif de mesure (11) selon l'une quelconque des revendications 10 à 12.
